# EUROPÄISCHE PATENTSCHRIFT

(11) **EP 1 093 202 B1**
(45) Veröffentlichungstag und Bekanntmachung des Hinweises auf die Patenterteilung: **18.01.2006**
(21) Anmeldenummer: 99120492.6
(22) Anmeldetag: 15.10.1999
(51) Int. Cl.: H02H 5/12, G01V 3/06

(54) **Verfahren zur Detektion von geerdeten Leitungen zum Abschalten einer Bohrmaschine**
Method for detecting grounded conductors for switching off a power drill
Procédé pour détecter des conducteurs mises à la masse pour arrêter une perceuse

(43) Veröffentlichungstag der Anmeldung: 18.04.2001
(73) Patentinhaber: Westfalia Werkzeugcompany Gesellschaft mit beschränkter Haftung, 58093 Hagen (DE)
(72) Erfinder: Klingbeil, Thomas, 46240 Bottrop (DE)
(74) Vertreter: Stark, Walter

(56) Entgegenhaltungen:
- WO-A-97/12174
- DE-A- 3 207 747
- DE-A- 3 703 311

## Beschreibung

Die Erfindung betrifft ein Verfahren zur Detektion von geerdeten Leitungen zum Abschalten einer Bohrmaschine, sowie eine Bohrmaschine. Aus der WO-A-97/12174 ist ein derartiges Verfahren sowie eine derartige Bohrmaschine bekannt.

Aus der Praxis sind derartige Verfahren bekannt, bei denen durch Kontakt der Bohrmaschine bzw. in der Regel bei Kontakt des im Bohrfutter eingespannten Bohrers mit der geerdeten Leitung der Widerstand einer in der Bohrmaschine vorgesehenen Widerstandsbrücke überbrückt wird. Dies wird von einer Messeinrichtung detektiert, und die Bohrmaschine wird dann abgeschaltet.

Nachteilig hierbei ist, dass zum einen die Detektion und damit auch die Abschaltung erst erfolgt, wenn bereits Kontakt erfolgt ist und durch das Nachlaufen der Maschine bei bereits erfolgter Abschaltung die getroffene Leitung weiter beschädigt oder sogar vollständig zerstört wird.

Aufgabe der Erfindung ist es, die vorgenannten Nachteile zu vermeiden und ein Verfahren zur berührungslosen Detektion von geerdeten Leitungen zum Abschalten einer Bohrmaschine anzugeben, mit dem geerdete Leitungen beschädigungsfrei detektiert werden können.

Diese Aufgabe wird gelöst durch ein Verfahren zur Detektion von geerdeten Leitungen zum Abschalten einer Bohrmaschine, wobei die Detektion berührungslos erfolgt und zur Detektion ein Signal über die Stromversorgungsleitung der Bohrmaschine in die Erdungsleitung des Stromnetzes eingespeist und der Strom durch den Bohrkopf gemessen wird und zur Strommessung eine um einen Teil des Bohrkopfes und/oder der Antriebswelle angeordnete, toroidförmige Spule verwendet wird, so dass ohne eine aufwendige mechanische Änderung der Bohrmaschine die erforderlichen Werte erfasst und ausgewertet werden können.

Erfindungsgemäß kann das Signal aus zumindest einem Hochfrequenzsignal bestehen, so dass ein ausreichend hohes in Störungen nicht untergehendes Nutzsignal erreicht wird, wobei die Wellenlänge deutlich größer als die Summe von Abstand zwischen Bohrmaschine und Leitung sowie Länge der Bohrmaschine inklusiv Zuleitung sein muss.

Bei einem bevorzugten Verfahren kann zur Detektion die Veränderung von Amplitude und/oder Phase des gemessenen Signals bei der(den) eingespeisten Frequenz(en) analysiert werden.

Erfindungsgemäß kann die Bohrmaschine durch kurzfristiges Umpolen des Motors gezielt abgebremst werden, so dass das Nachlaufen und somit die Gefahr einer Beschädigung der Leitung nochmals deutlich reduziert wird.

Die Erfindung betrifft weiterhin eine Bohrmaschine mit einer Detektionseinrichtung für geerdete Leitungen zum Abschalten der Bohrmaschine, insbesondere zur Durchführung der vorgenannten Verfahren.

Aus der Praxis sind derartige Bohrmaschinen bekannt, bei denen durch Kontakt der Bohrmaschine bzw. in der Regel bei Kontakt des im Bohrfutter eingespannten Bohrers mit der geerdeten Leitung der Widerstand einer in der Bohrmaschine vorgesehenen Widerstandsbrücke überbrückt wird. Dies wird von einer Messeinrichtung detektiert und die Bohrmaschine wird dann abgeschaltet.

Nachteilig hierbei ist, dass zum einen die Detektion und damit auch die Abschaltung erst erfolgt, wenn bereits Kontakt erfolgt ist und durch das Nachlaufen der Maschine bei bereits erfolgter Abschaltung die getroffene Leitung weiter beschädigt oder sogar vollständig zerstört wird.

Aufgabe der Erfindung ist es, die vorgenannten Nachteile zu vermeiden und eine Bohrmaschine anzugeben, mit der geerdete Leitung beschädigungsfrei detektiert werden können.

Diese Aufgabe wird gelöst durch eine Bohrmaschine mit einer Detektionseinrichtung für geerdete Leitungen zum Abschalten der Bohrmaschine, wobei die Detektionseinrichtung zur berührungslosen Detektion geeignet ist. Hierdurch kann das Abschalten der Bohrmaschine bereits bei einem ausreichend großen Abstand von der Leitung erfolgen, so dass auch bei üblichem Nachlaufverhalten kein Kontakt und somit auch keine Beschädigung der Leitung erfolgt.

Dabei ist ein Signalgenerator zur Einspeisung zumindest eines Signals, insbesondere Hochfrequenzsignals, über die Stromversorgungsleitung der Bohrmaschine in die Erdungsleitung vorgesehen, so dass durch Einspeisung dieses Signals über die Stromversorgung der Bohrmaschine in die Erdungsleitung des Stromnetzes ein elektrisches Feld zwischen der Leitung und der Bohrmaschine entsteht.

Die Detektionseinrichtung weist eine Messeinrichtung zur Messung des Stromes durch den Bohrkopf auf, wobei die Messeinrichtung eine um einen Teil des Bohrkopfes und/oder der Antriebswelle angeordnete toroidförmige Spule ist so dass ohne eine aufwendige mechanische Änderung der Bohrmaschine die erforderlichen Werte erfasst und ausgewertet werden können.

Hierbei kann die elektrische Verbindung von Spule und Detektionseinrichtung als miteinander verdrillte Leitungen ausgebildet sein, so dass das gemessene Signal nicht durch Einstreuungen verfälscht oder abgeschwächt wird.

Vorzugsweise kann die Detektionseinrichtung mit einer Analyseeinrichtung zur Analyse von Amplituden- und/oder Phasenveränderungen des gemessenen Signals bei der(den) eingespeisten Frequenz(en) versehen sein.

Im Folgenden werden erfindungsgemäße Verfahren anhand in der Zeichnung dargestellter Ausführungsbeispiele der Erfindung erläutert. Es zeigen:
- Fig. 1: ein erstes Ausführungsbeispiel einer erfindungsgemäßen Bohrmaschine und
- Fig. 2: ein weiteres Ausführungsbeispiel einer Bohrmaschine.

In allen Figuren werden für gleiche bzw. gleichartige Bauteile die gleichen Bezugszeichen verwendet.

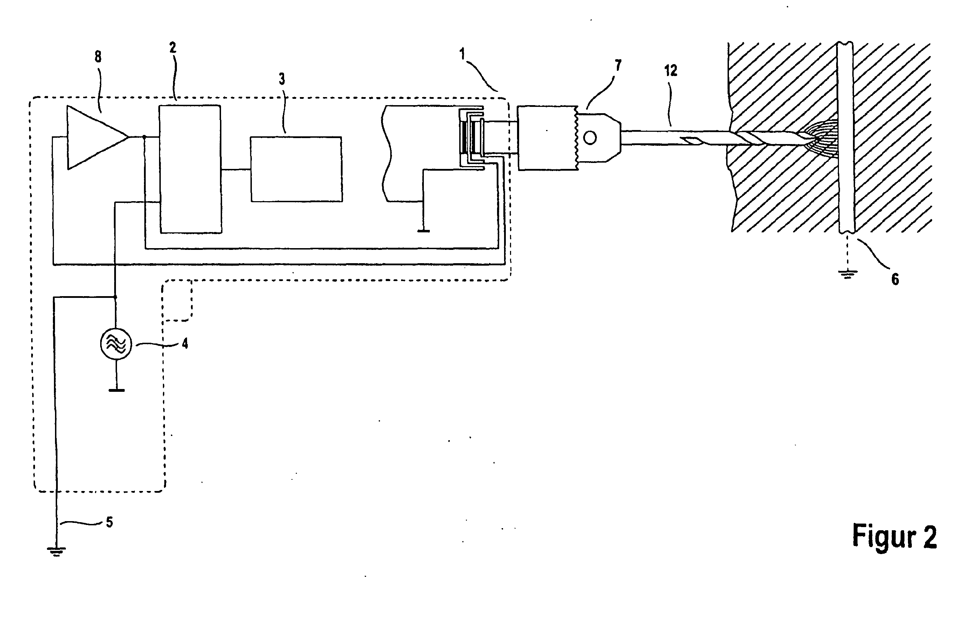

Fig. 2 zeigt eine Bohrmaschine 1 mit einer Detektionseinrichtung 2, die über ein Stellglied 3 die Bohrmaschine 1 bei erfolgter Detektion abschaltet. Hierfür ist ein Signalgenerator 4 vorgesehen, der über die Stromversorgungsleitung 5 der Bohrmaschine 1 ein Hochfrequenzsignal in die Erdungsleitung des Stromnetzes einspeist, welches durch die Erdung ebenfalls in eine zu detektierende geerdete Leitung 6 übertragen wird. Somit entsteht zwischen Bohrer 12 und Leitung 6 ein elektrisches Feld, aufgrund dessen an dem von Getriebe und Gehäuse (in der Zeichnung nicht dargestellt) isolierten Bohrkopf 7 eine Spannung anliegt, die durch eine Messeinrichtung 8 gemessen wird. Insofern kann die Spannung einfach über das in der Zeichnung ebenfalls nicht dargestellte Kugellager des Bohrkopfes 7 gemessen werden.

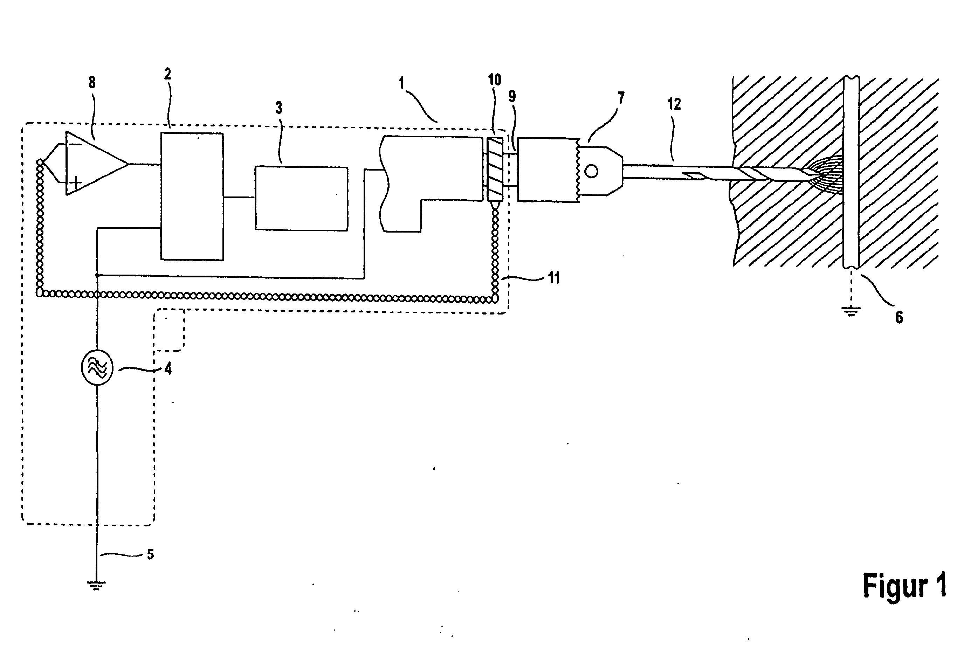

Fig. 1 zeigt ein weiteres Ausführungsbeispiel einer erfindungsgemäßen Bohrmaschine 1. Hierbei wird ebenfalls von einem Signalgenerator 4 ein Hochfrequenzsignal über das Getriebe in den Bohrkopf 7 eingespeist, so dass zwischen Bohrkopf 7 und Leitung 6 ein elektrisches Feld entsteht. sen wird und über miteinander verdrillte Leitungen 11 über die Messeinrichtung 8 an die Detektionseinrichtung 2 weitergeleitet wird.

Bei beiden Verfahren analysiert die Detektionseinrichtung 2 z. B. mittels einer nicht dargestellten Analyseeinrichtung die Veränderung des Amplituden- und/oder Phasenverlaufs des gemessenen Signals bei der bzw. den eingespeisten Frequenz(en) und kann somit auf geerdete Leitungen 6 rückschliefSen. In einem Detektionsfalle wird mittels des Stellgliedes 3 die Bohrmaschine 1 abgeschaltet.

## Patentansprüche

1. Verfahren zur Detektion von geerdeten Leitungen (6) zum Abschalten einer Bohrmaschine (1), *wobei* die *Detektion berührungslos erfolgt und* zur *Detektion ein Signal über die Stromversorgungsleitung (5) der Bohrmaschine* (1) *in das stromnetz eingespeist und der Strom durch den Bohrkopf (7) gemessen wird*, **dadurch gekennzeichnet, dass** das Signal in die Erdungsleitung eingespeist wird und zur Strommessung eine um einen Teil des Bohrkopfes (7) und/oder der Antriebswelle (9) angeordnete toroidförmige Spule (10) verwendet wird.

2. Verfahren nach Anspruche 1 **dadurch gekennzeichnet, dass** das Signal aus zumindest einem Hochfrequenzsignal besteht.

3. Verfahren nach Ansprch 1 oder 2 **dadurch gekennzeichnet, dass** zur Detektion die Veränderung von Amplitude und/oder Phase des gemessenen Signals bei der(den) eingespeisten Frequenz(en) analysiert wird.

4. Verfahren nach einem der Ansprüche 1 bis 3, **dadurch gekennzeichnet, dass** die Bohrmaschine (1) durch kurzfristiges Umpolen des Motors gezielt abgebremst wird.

5. Bohrmaschine (1) mit einer Detektionseinrichtung (2) für geerdete Leitungen (6) zum Abschalten der Bohrmaschine (1), wobei die Detektionseinrichtung (2) zur berührungslo*sen* Detektion geeignet *ist und ein Signalgenerator* (4) zur *Einspeisung zumindest* eines *Signals* insbesondere Hochfrequenzsignals, über die *Stromversorgungsleitung* (5) der *Bohrmachine (1) in das Stromnetz vorgesehen ist*, insbesondere zur Durchführung des Verfahrens nach einem der Ansprüche 1 bis 4, **dadurch gekennzeichnet, dass** der Signalgenerator geeignet ist, das Signal in die Erdungsleitung des Stromnetzes einzuspeisen und die Detektionseinrichtung (2) eine Messeinrichtung (8) zur Messung des Stromes durch den Bohrkopf (7) aufweist, wobei die Messeinrichtung (8) eine um einen Teil des Bohrkopfes (7) und/oder der Antriebswelle (9) angeordnete toroidförmige Spule (10) ist.

6. Bohrmaschine (1) nach Anspruch 5, **dadurch gekennzeichnet, dass** die elektrische Verbindung von Spule (10) und Detektionseinrichtung (2) als miteinander verdrillte Leitungen (11) ausbildet ist.

7. Bohrmaschine (1) nach Anspruch 5 oder 6 **dadurch gekennzeichnet, dass** die Detektionseinrichtung (2) mit einer Analyseeinrichtung zur Analyse von Amplituden- und/oder Phasenveränderungen des gemessenen Signals bei der(den) eingespeisten Frequenz(en) versehen ist.

## Claims

1. Method for detecting earthed conductors (6) for switching off a drill (1), the detection taking place in a contact-free manner and, for this detection, a signal being fed into the power supply network via the power supply line (5) of the drill (1), and the current through the drill head (7) being measured, **characterised in that** the signal is fed into the earth conductor and a toroidal coil (10) is arranged around a part of the drill head (7) and/or of the drive shaft (9) in order to measure the current.

2. Method according to claim 1, **characterised in that** the signal comprises at least one high-frequency signal.

3. Method according to claim 1 or 2, **characterised in that** for the detection, the change in amplitude and/or phase of the measured signal at the supplied frequency (frequencies) is analysed.

4. Method according to one of claims 1 to 3, **characterised in that** the drill (1) is deliberately braked by short-term pole reversal of the motor.

5. Drill (1) having a device (2) for detecting earthed conductors (6) for switching off the drill (1), the detection device (2) being suitable for contact-free detection and a signal generator (4) being provided for feeding at least one signal, especially a high-frequency signal, via the power supply line (5) of the drill (1) into the power supply network, especially for carrying out the method according to one of claims 1 to 4, **characterised in that** the signal generator is suitable for feeding the signal into the earth conductor of the power supply network and the detection device (2) has a measuring device (8) for measuring the current through the drill head (7), the measuring device (8) being a toroidal coil (10) arranged around a part of the drill head (7) and/or of the drive shaft (9).

6. Drill (1) according to claim 5, **characterised in that** the electric connection between the coil (10) and detection device (2) is in the form of leads (11) which are twisted together.

7. Drill (1) according to claim 5 or 6, **characterised in that** the detection device (2) is provided with an analysing device for analysing amplitude and/or phase changes of the measured signal at the supplied frequency (frequencies).

## Revendications

1. Procédé de détection de conduites mises à la terre (6) pour arrêter une perceuse (1), dans lequel la détection est réalisée sans contact, un signal est injecté dans le réseau électrique par la ligne d'alimentation électrique (5) de la perceuse (1) et le courant est mesuré par la tête de perçage (7), **caractérisé par le fait que** le signal est injecté dans la ligne de mise à la terre et que l'on utilise pour la mesure du courant une bobine toroïdale (10) disposée autour d'une partie de la tête de perçage (7) et/ou de l'arbre d'entraînement (9).

2. Procédé selon la revendication 1, **caractérisé par le fait que** le signal est composé d'au moins un signal à haute fréquence.

3. Procédé selon la revendication 1 ou 2, **caractérisé par le fait que** la détection est réalisée par analyse de la modification d'amplitude et/ou de phase du signal mesuré à la / aux fréquence(s) injectée(s).

4. Procédé selon l'une des revendications 1 à 3, **caractérisé par le fait que** la perceuse (1) est volontairement freinée par brève inversion de polarité du moteur.

5. Perceuse (1) avec un dispositif de détection (2) de conduites mises à la terre (6) pour arrêter la perceuse (1), dans laquelle le dispositif de détection (2) convient pour la détection sans contact et il est prévu un générateur de signaux (4) pour l'injection d'au moins un signal, en particulier un signal à haute fréquence, dans le réseau électrique par la ligne d'alimentation électrique (5) de la perceuse (1), en particulier pour la réalisation du procédé selon l'une des revendications 1 à 4, **caractérisée par le fait que** le générateur de signaux convient pour injecter le signal dans la ligne de mise à la terre du réseau électrique et que le dispositif de détection (2) présente un dispositif de mesure (8) pour mesurer le courant à travers la tête de perçage (7), le dispositif de mesure (8) étant une bobine toroïdale (10) disposée autour d'une partie de la tête de perçage (7) et/ou de l'arbre d'entraînement (9).

6. Perceuse selon la revendication 5, **caractérisée par le fait que** la connexion électrique de la bobine (10) et du dispositif de détection (2) est réalisée sous la forme de lignes torsadées (11).

7. Perceuse selon la revendication 5 ou 6, **caractérisée par le fait que** le dispositif de détection (2) est muni d'un dispositif d'analyse pour analyser des modifications d'amplitude et/ou de phase du signal mesuré à la / aux fréquence(s) injectée(s).
